# EUROPEAN PATENT SPECIFICATION

(11) **EP 0 654 071 B1**
(45) Date of publication and mention of the grant of the patent: **23.08.2000**
(21) Application number: 93918565.8
(22) Date of filing: 02.08.1993
(51) Int. Cl.: C09J 133/08, C09J 121/02

(54) **PRESSURE SENSITIVE ADHESIVE LATEX COMPOSITIONS**
DRUCKEMPFINDLICHE KLEBLATEXZUSAMMENSETZUNGEN
COMPOSITIONS AU LATEX AUTOADHESIVES

(30) Priority: 06.08.1992 US 926247
(43) Date of publication of application: 24.05.1995
(73) Proprietor: THE DOW CHEMICAL COMPANY, Midland, Michigan 48674 (US)
(72) Inventor: RANCE, Robert, W., D-7580 Buehl (DE); OLIVER, Stephen, M., D-8832 Wollerau (DE)
(74) Representative: Casalonga, Axel
(86) International application number: US9307239
(87) International publication number: WO9403550

(56) References cited:
- EP-A- 0 312 228
- DE-A- 1 814 115
- FR-A- 2 312 549
- US-A- 3 547 852
- CHEMICAL PATENTS INDEX, DOCUMENTATION ABSTRACTS JOURNAL Week 9120, 17 July 1991 Derwent Publications Ltd., London, GB; AN 91144907 & JP,A,03 081 379 (SUMITOMO NAUGATUCK) 5 April 1991

## Description

The present invention refers to polymer latex compositions, more particularly, to pressure sensitive adhesive latex compositions.

Pressure sensitive adhesives are commonly a polymeric material which, when dried, is aggressively and permanently tacky at room temperature. A typical pressure sensitive adhesive will firmly adhere to a variety of dissimilar surfaces upon mere contact without the need of more than finger- or hand-applied pressure.

DE-A-1 814 115 is directed to a pressure sensitive adhesive composition comprising a terpolymer of 80-96 parts 2-ethylhexyl acrylate, 2.0 - 19 parts N-octyl acrylamide and 1-4 parts acrylamide or methacrylamide, the sum of the parts of N-octyl acrylamide and methacrylamide or acrylamide being at least equal to 4. The composition further comprises from 1-10 parts, per 100 parts of solids of said terpolymer, of an acrylic terpolymer resin of an acrylic terpolymer comprising 30-40 weight percent 1-butyl acrylamide, 55-65 weight percent ethyl acrylate, and 5-15 weight percent acrylic acid, wherein the acrylic terpolymer resin is alkali-soluble.

The application teaches a water-resistant (i.e. water-insoluble) latex composition which is obtained by adding an alkali-soluble latex to an acrylamide-based latex. More particularly, this German patent application specifically teaches that without the alkali-soluble latex, the acrylamide-based latex, although exhibiting good tack and bonding strength, lacks water resistance. Thus, the objective of this application is to render a water-soluble latex *insoluble* by adding an alkali-soluble latex.

Due to increasing environmental concerns, efforts are being made to recycle fabricated products, such as, for example, paper and adhesive paper labels. In one recycling method, paper products are heated, with agitation, in water or dilute alkali to cause the paper to disintegrate into its component fibers. When a non-dispersible adhesive is present, the paper fibers will break away from the adhesive leaving large lumps and films of adhesive within the disintegrated fiber mass. These lumps and films can eventually show up in the repulped (recycled) paper as blotches and irregularities. As a result, the recycled paper is considered of lower quality than non-recycled paper. This is due not only to its non-uniform properties including variations in the ability of its surface to retain ink, but also to the presence of adhesive lumps or films thereon. Additionally, process difficulties can arise in repulping paper due to the adhesion of the adhesive lumps to the paper making equipment, which can ultimately result in shutdowns for equipment cleaning.

Heretofore, water-soluble or water-dispersible adhesives have been used to provide repulpable pressure sensitive adhesive labels. Unfortunately, when recycling or repulping paper containing water-soluble adhesives, the adhesive goes into the aqueous treatment stream. As this treatment stream is generally recycled, the concentration of the water-soluble material is increased at each cycle. Additionally, for both the water-soluble and water-dispersible adhesives, the performance of the adhesives can be affected by humidity or wet conditions leading to loss of adhesion.

In view of the outlined deficiencies, there is still a need for pressure sensitive adhesives which will not adversely and significantly affect the quality of the recycled paper or the repulping process, and which do not lead to build-up of water-soluble materials in the recycled water stream. Furthermore, it would be highly desirable to provide pressure sensitive adhesives whose adhesive properties are not affected by humidity or wet conditions.

Accordingly, in one aspect, the present invention is an adhesive latex composition which is water-insoluble when dried comprising (A) from 90 weight percent to 10 weight percent of a pressure sensitive adhesive latex which is alkali-dispersible when dried and prepared by emulsion polymerization from a monomer mixture comprising from 50 to 99.5 weight percent of an ester or amide of (meth)acrylic acid and up to 50 weight percent ethylenically unsaturated carboxylic acid monomers; (B) from 10 weight percent to 90 weight percent of a pressure sensitive adhesive latex which is non-alkali-dispersible when dried arid prepared by emulsion polymerization from a monomer mixture comprising from 50 to 99.5 weight percent of an ester or amide of (meth)acrylic acid and from 0.5 to 5 weight percent ethylenically unsaturated carboxylic acid monomers, said percentages being based on the total weight of the components (A) and (B).

In a preferred embodiment, the adhesive later composition which is water-insoluble when dried further comprises (C) up to about 60 weight percent of one or more tackifiers, based on the combined weight of the components (A), (B) and (C).

In another aspect, the present invention is an alkali-dispersible pressure sensitive adhesive prepared from the adhesive latex or latex composition which is water-insoluble when dried.

In yet another aspect, the present invention is a method of preparing a pressure sensitive adhesive label comprising (i) coating at least a portion of at least one major surface of a label substrate with the adhesive latex composition of the present invention, and (ii) drying the coated label substrate so as to convert the latex coating to a pressure sensitive adhesive layer.

Yet another aspect of the present invention is a repulpable adhesive label comprising the adhesive latex composition.

Surprisingly, it has been found that the water-insoluble adhesive latex composition of the present invention provide pressure sensitive adhesives exhibiting good physical properties, such as tack, good peel strength and water-resistance, and unexpectedly improved repulpability properties.

The latex components (A) and (B) of the water-insoluble adhesive latex composition of the present invention are both water-insoluble, pressure sensitive adhesives; with latex component (A) being alkali-dispersible whereas latex component (B) is a pressure sensitive adhesive which is non-alkali-dispersible. The components (A) and (B) may be prepared using the same or different monomers, except that component (A) will contain, in polymerized form, a monomer which renders that component alkali-dispersible.

By the term "pressure sensitive adhesive" is meant any polymer latex wherein the polymeric phase has a glass transition temperature (Tg) of less than 0°C, preferably less than - 10°C, and most preferably less than - 15°C as measured using a differential scanning calorimeter and which is inherently tacky and will adhere, upon mere contact, to a variety of dissimilar surfaces without the need of more man finger- or hand-applied pressure, or which can be made to do so by the addition of suitable tack producing materials (tackifiers).

As used herein, "alkali-dispersible pressure sensitive adhesive latex" means any pressure sensitive adhesive latex which, when dried and at a given concentration, becomes swollen or extremely fragile in an alkali medium and capable of being broken into fine particles either spontaneously or by mechanical agitation. For purposes of this invention, a pressure sensitive adhesive latex is considered alkali-dispersible if, when coated onto a Mylar® polyester film at a dry coat weight of about 20 grams per square meter (g/m²) and shaken for 30 minutes (min) in a laboratory shaker Model SM 25 (commercially available from E. Buehler, Germany) at a rate of 175 shakes per minute (shakes/min) while immersed in an alkali solution at room temperature (± 25°C) having a pH of about 10, the pressure sensitive adhesive latex is removed from the Mylar® polyester film and redispersed to fine particles. The pH can be imparted to the alkali solution using sodium, potassium, or ammonium hydroxide, with sodium hydroxide being preferred. An adhesive which remains attached to the Mylar® polyester film, or if detached would remain as large intact pieces of adhesive film is herein referred to as non-alkali-dispersible pressure sensitive adhesive.

By the term "water-insoluble adhesive latex composition", as used herein, is meant that while minor components of the latex composition, such as surfactants used in the preparation of components latexes (A) or (B) or in the preparation of the tackifier emulsion, may themselves be soluble in water at a pH of about 7 and below, the adhesive film made from the latex does not dissolve nor break-up in hot or cold water (pH = 7) to give a clear solution or dispersion of fine particles.

Monomers which can be employed to prepare either component (A) or (B) include acrylic or acrylate monomers, ethylenically unsaturated carboxylic acid monomers, hydroxyalkyl(meth)acrylate monomers and (meth)acrylamide monomers. Preferably, both pressure sensitive adhesive latex components (A) and (B) comprise an acrylic or acrylate monomer or some mixture thereof. In general, components (A) and (B) will also comprise an unsaturated carboxylic acid, in polymerized form, with such monomer being employed in component (A) in amounts sufficient to make that latex alkali-dispersible. The other monomers are optionally employed in various amounts depending on the end-use application and desirable properties of the latex composition.

Acrylate monomers useful in the present invention are esters and amides of the (meth)acrylic acid, and substituted derivatives thereof. They include, for example, n-, iso- or tert-alkyl esters of acrylic or methacrylic acid, wherein the alkyl group has from 1 to 20 carbon atoms, the reaction product of (meth)acrylic acid with the glycidyl ester of a neo-acid such as versatic, neo-decanoic or pivalic acid.

Generally, the preferred acrylate monomers are C1-C10 alkyl (meth)acrylates or alkoxy C1-C10 alkyl (meth)acrylates, most preferably C1-C8 alkyl (meth)acrylates or alkoxy C1-C8 alkyl(meth)acrylates. Examples of such acrylate monomers include n-butyl acrylate, sec-butyl acrylate, ethyl acrylate, hexyl acrylate, tert-butyl acrylate, 2-ethylhexyl acrylate, iso-octyl acrylate, 4-methyl-2-pentyl acrylate, 2-methylbutyl acrylate and tert-butyl acrylate, methyl methacrylate, n-butyl methacrylate, iso-butyl methacrylate, ethyl methacrylate, iso-propyl methacrylate, hexyl methacrylate, cyclohexyl methacrylate, and cetyl methacrylate, methoxyethyl methacrylate, ethoxyethyl methacrylate, methoxyethyl acrylate, ethoxyethyl acrylate, butoxyethyl methacrylate, methoxybutyl acrylate and methoxyethoxyethyl acrylate. The preferred acrylate monomers are n-butyl acrylate, butyl methacrylate, 2-ethylhexyl acrylate ethoxyethyl acrylate and methoxyethyl acrylate, with n-butyl acrylate being especially preferred. Frequently, two or more acrylate monomers are used. The alkyl esters of acrylic or methacrylic acid and alkoxyalkyl(meth)acrylate monomers can be employed as the sole monomer or a portion of the monomer mixture.

Latex components (A) and (B) can be prepared using any of the described monomers in amounts which make a pressure sensitive adhesive. In one embodiment, the pressure sensitive adhesive components (A) and (B) comprise from 30 to 99.5 weight percent, preferably from 40 to 99.5 weight percent, most preferably from 50 to 99.5 weight percent acrylate monomer, based on the total weight of the polymer.

The "hydroxyalkyl(meth)acrylate monomers" useful herein include hydroxyalkyl acrylate and methacrylate monomers based on ethylene oxide, propylene oxide, or other higher alkylene oxides, or mixtures thereof. Examples are hydroxyethyl acrylate, hydroxypropyl acrylate, hydroxyethyl methacrylate, hydroxypropyl methacrylate, and hydroxybutyl acrylate. Preferred hydroxyalkyl(meth)acrylate monomers are hydroxyethyl acrylate, hydroxypropyl acrylate, and hydroxybutyl acrylate.

"(Meth)acrylamide monomers" useful herein include the amides of α,β-olefinically unsaturated carboxylic acids, such as, for example, acrylamide, methacrylamide and diacetone acrylamide. The preferred (meth)acrylamide monomer is acrylamide.

Typically, the amounts of these monomers employed in the preparation of either of the pressure sensitive adhesive components will vary depending on the monomer chosen as well as the desired properties of the polymer. Typically, when employed, the hydroxyalkyl(meth)acrylate is used in amounts up to about 50, preferably up to about 40, weight parts: and the (meth)acrylamide monomer up to about 40, preferably up to about 30, weight parts; all parts based on 100 total weight part of the polymer.

Component (A) is prepared using a monomer in amounts which renders it alkali-dispersible. In a preferred embodiment of the present invention, the alkali-dispersible pressure sensitive adhesive latex, that is, component (A), comprises ethylenically unsaturated carboxylic acid monomer(s) in an amount sufficient to render this component alkali dispersible. It is preferred for the practice of the present invention to use ethylenically unsaturated aliphatic mono- or dicarboxylic acid(s) or acid anhydride(s) containing 3 to 5 carbon atoms. Exemplary monocarboxylic acid monomers include, for example, acrylic acid, methacrylic acid; and exemplary dicarboxylic acid monomers include, for example, fumaric acid, itaconic acid, crotonic acid, maleic acid, and maleic anhydride. Of these, acrylic acid, methacrylic acid, fumaric acid, itaconic acid, or combinations thereof are preferred.

While the amount of ethylenically unsaturated carboxylic acid monomer(s) required for such purpose will vary depending on the composition of component (A), in general, the ethylenically unsaturated carboxylic acid monomer(s) is used in an amount up to 50, preferably up to 30 weight percent, based on the total weight of the component (A).

Component (B) may optionally contain minor amounts of a monomer such as the ethylenically unsaturated carboxylic acid which, if used in greater amounts, would render the polymer alkali-dispersible. The addition of an ethylenically unsaturated carboxylic acid monomer has been generally found to improve the stability of the latex and adhesion of the latex films which makes them suitable for use in adhesive formulations. The use of this ethylenically unsaturated carboxylic acid monomer affects the properties of the polymer dispersion and adhesive formulation and the type and the amount which are used are determined thereby. Typically, the ethylenically unsaturated carboxylic acid monomer will be used in an amount sufficient to stabilize the latex particle. A typical example of such an amount is from 0.1 to 5, preferably 0.5 to 3, weight percent.

Preferred polymers useful as component A include alkyl acrylates with polymerizable carboxylic acids and, optionally other polymerizable monomers. Among these alkali-dispersible pressure sensitive adhesive latices, copolymers of alkyl acrylates with polymerizable carboxylic acids and, optionally other polymerizable monomers are preferred, with copolymers of n-butyl acrylate, methacrylic acid and hydroxyethyl acrylate being especially preferred.

Preferred polymers useful as component (B) include, but are not limited to those described in European Patent Applications Nos. 37,923, 289,774 and 296,576. Representatives of such pressure sensitive adhesive latices include n-butyl acrylate based copolymer latex (commercially available from The Dow Chemical Co. under the trademark DL 367) and 2-ethylhexyl acrylate based copolymer latex (commercially available from The Dow Chemical Co. under the trademark DL 350). Among these pressure sensitive adhesive latices, n-butyl acrylate based copolymer latices and 2-ethylhexyl acrylate based copolymer latices are preferred, with n-butyl acrylate based copolymer latices being especially preferred.

The relative proportions of component (A) and component (B) employed in preparing the composition of this invention will vary depending on a variety of factors, including the individual adhesive properties of the two components; the use of additional tackifiers, their type and amount; and the alkali dispersibility and glass transition temperatures of the two components. With component (A) having good adhesive properties, the proportion of component (B) can be reduced. If the dispersibility of component (A) is high but the adhesive properties are inferior to component (B) the proportion of component (B) can advantageously be increased to retain the adhesive properties, while maintaining the alkali dispersibility.

Generally, the proportion of the alkali-dispersible pressure sensitive adhesive latex (component (A)) to the pressure sensitive adhesive latex (component(B)) is from 90:10 parts by weight to 10:90 parts by weight, preferably from 80:20 parts by weight to 20:80 parts by weight, and most preferably from 70:30 parts by weight to 30:70 parts by weight.

In general, the components (A) and (B) can be prepared by polymerization processes which are known in the art, and particularly by the known latex emulsion polymerization processes, including both seeded and unseeded latex polymerization Representative processes include those described in U.S Patents Nos. 4,478,974; 4,751,111; 4,968,740; 3,563,946 and 3,575,913, and German Patent Publication No 1,905,256. Such processes can be adapted as necessary to polymerize the above described monomers. The method of introduction of the monomers and other ingredients, such as polymerization aids, is not particularly critical. The polymerization is then carried out under conventional conditions until the desired degree of polymerization is achieved. Crosslinkers and the well-known latex polymerization aids such as initiators, chain transfer agents, surfactants and emulsifiers can be used as needed.

Initiators useful in the practice of the present invention include water-soluble initiators which are effective for purposes of polymerization. Representative initiators are well-known in the art and include, for example, redox pairs including sodium bisulfite and sodium persulfate, ferrous ions and a peroxide (Fenton's reagent), cuprous ions and peroxide, and ferrous ions and sodium persulfate wherein the peroxides can include benzoyl peroxide, hydrogen peroxide, or t-butyl peroxide. These initiators can be combined with thermal initiators that are not water-soluble, such as higher alkyl peroxides or azo compounds or thermal initiators which are water-soluble such as persulfate. Examples of water-insoluble thermal initiators are azobisisobutyronitrile and t-butylperoctoate.

The initiator is employed in an amount sufficient to initiate the polymerization reaction at a desirable rate. In general, the amount of initiator will range from 0.05 to 5, preferably 0.1 to 4 weight percent, based on the weight of the total polymer. Most preferably, the amount of initiator is from 0.1 to 3 weight percent, based on the total weight of the polymer.

Crosslinkers useful in this invention include crosslinkable monomers, such as, for example, N-methylol acryl amide, N-methylol methacrylamide, glycidyl acrylate, glycidyl methacrylate, ethylene glycol dimethacrylate, allyl methacrylate, propylene glycol dimethacrylate, divinylbenzene: and acryloxy alkylsilanes, such as, for example α-acryloxypropyl trimethoxysilane. Preferred crosslinkable monomers, for use in the present invention, are allyl methacrylate, glycidyl methacrylate, and acryloxy alkylsilanes. These crosslinkable monomers, if used, are typically employed at levels of from 0.05 to 10, preferably 0.05 to 5 weight percent, more preferably 0.05 to 2 weight percent, based on the weight of the total polymer.

Chain transfer agents include aliphatic alcohols, for example methanol or isopropyl alcohol; carbon tetrachloride: the mercaptans such as tertiary dodecyl mercaptan; and any other water-soluble or hydrocarbon soluble material capable of controlling the molecular weight of polymers. To optimize the process of the present invention, the rate of polymerization as well as the molecular weight of the polymer are important for the adhesive properties, The molecular weight of the polymer can be controlled by initiator concentration and/or chain transfer agent. The rate of polymerization is controlled by initiator type level and temperature. If the initiators are chosen to optimize the molecular weight of the latex polymer particle, a chain transfer agent may not be necessary. Typically, the chain transfer agent is used in an amount effective to provide a polymer of the desired molecular weight.

Surfactants or emulsifiers suitable for use herein include those conventional surface active agents typically known in the art for polymerization processes. The surfactant(s) can be added to the aqueous phase and/or monomer phase. An effective amount of surfactant in a seeded process is that amount selected to assist in stabilizing the particle as a colloid, minimizing contact between the particles and preventing coagulation. In an unseeded process, an effective amount of surfactant will be that amount selected to influence the particle size.

Representative surfactants include ethylenically unsaturated sulfonic acid or salts thereof, inducing, for example, hydrocarbon-sulfonic acids, such as, vinylsulfonic acid, allylsulfonic acid, and methallylsulfonic acid, and salts thereof: aromatic hydrocarbon-sulfonic acids, such as, for example, p-styrenesulfonic acid, isopropenylbenzene-sulfonic acid, 2-chlorostyrene-sulfonic acid, and vinyloxybenzenesulfonic acid, and salts thereof: sulfoalkyl esters of acrylic acic and methacrylic acid, such as, for example, sulfoethyl methacrylate and sulfopropyl methacrylate and salts thereof; and 2-acrylamido-2-methylpropanesulfonic acid and salts thereof; alkylated diphenyl oxide disulfonates, sodium dodecyl benzene sulfonates and dihexyl esters of sodium sulfosuccinic acid, ethoxylated alkyl phenols and ethoxylated alcohols.

The type and concentration of surfactant are typically dependent on the polymer solids level. A higher polymer solids level will generally increase the need for surfactant. Typically, the surfactant is employed in amounts of from 0.05 to 20, preferably from 0.05 to 10, more preferably from 0.05 to 5, parts by weight, based on the total weight of the monomers.

Various protective colloids may also be used in place of or in addition to the surfactants described above. Suitable colloids include partially acetylated polyvinyl alcohol, casein, hydroxyethyl starch, carboxymethyl cellulose, hydroxyethyl cellulose, hydroxypropyl cellulose and gum arabic. The preferred protective colloids are carboxymethyl cellulose, hydroxyethyl cellulose and hydroxypropyl cellulose. In general, these protective colloids are used at levels of 0 to 10, preferably 0 to 5, more preferably 0 to 2 parts by weight, based on the total weight of the monomers.

Depending on the adhesive properties of the latex, it may be desirable and is often preferable to add one or more tackifier(s) which increase the adhesion of the compositions in general or for specific surfaces. Suitable tackifiers include polyterpenes, gum rosin, rosin esters and rosin acids, oil-soluble phenolic resins, coumarone-indene resins and petroleum hydrocarbon resins. The method of addition of the tackifier(s) is not critical, i.e., the tackifier(s) may be added separately to each latex component before blending or added after blending of the latex components. Alternatively, the tackifiers can be either added before or curing the polymerization process or blended in afterwards, in general, it is preferable to add the tackifier(s) separately to component (A) and (B) and subsequently blend the two latex/tackifier mixtures. When used, based on the weight of tackifier and components (A) and (B), the tackifier is typically used in amounts of at least 5, preferably at least 10, most preferably at least 15, weight percent. Usually, the tackifier levels do not exceed 70 weight percent, with 50 weight percent or less being preferred.

Rosin acid tackifiers useful in the practice of the present invention are those tackifiers described in Kirk Othmer Encyclopedia of Chemical Technology, interscience Publishers. 2nd Edition, Vol. 17, pages 475-509. These tackifiers not only include the naturally occurring rosins but the chemically modified rosins obtained by hydrogenation and isomerization. The rosin employed should preferably have an acid number of at least about 100.

It is preferred to use a mixture of low softening point tackifier and a medium softening point tackifier. The term "low softening point tackifier", as used herein, is meant to include any tackifier having a softening point of less than about 55°C, preferably less than about 50°C, measured using the ring and ball ASTM method E28-67. Low softening point tackifiers, as used herein, are further defined as being soft or liquid and inherently tacky materials at ambient temperature (25°C). The term "medium softening point tackifier" is meant to include any tackifier having a softening point between 55°C and 150°C, preferably from 60°C to 90°C, measured using the ring and ball ASTM method E28-67.

Low softening point tackifiers may be incorporated in the present adhesive latex composition to provide the alkali-dispersible pressure sensitive latex with improved tack and to improve the repulpability. Representative low softening point tackifiers include one or more tackifiers of rosin-based resins or derivatives thereof, polyterpene resin, terpene-modified resins, aliphatic and aromatic hydrocarbon resins, phenolic resins, styrene resin and xylene resin. Preferred low softening point tackifiers are the rosin-based resins, such as the liquid rosin ester (commercially available from Hercules BV under the trademark Tacolyn® 98), the triethylene glycol rosin ester (commercially available from Veitsiluoto Oy under the trade name Oulutac 20), and the stabilized rosin acid (commercially available from Alliance Technical Products Ltd. under the tradename Permatac A522), with the Tacolyn® 98 liquid rosin ester and the Permatac A522 stabilized rosin acid being especially preferred.

The amount of low softening point tackifier(s) employed in the practice of the present invention is such to provide the adhesive latex composition with tack properties. Typically, the amount of low softening point tackifier(s) varies in the range of from 5 to 50 weight percent, preferably from 5 to 45 weight percent, most preferably from 5 to 40 weight percent, based on the total weight of the adhesive composition.

Medium softening point tackifiers are incorporated in the present adhesive latex composition to provide improved tack white retaining adequate cohesive strength. Representative medium softening point tackifiers include one or more tackifiers of rosin-based resins or derivatives thereof, polyterpene resin, terpene-modified resins, aliphatic and aromatic hydrocarbon resins, cyclopentadiene resin, phenolic resins, styrene resin and xylene resin. Preferred medium softening point tackifiers are the rosin-based resins, such as rosin ester (commercially available from Hercules BV under the trademark Tacolyn® 64), the esterified disproportionated rosin (commercially available from Eka Nobel under the trade name Snowtack SE80CF), and the stabilized high melt point rosin acid (commercially available from Alliance Technical Products Ltd. under the tradename Permatac A751), with Tacolyn® 64 rosin ester and the Permatac A751 stabilized high melt point rosin acid being especially preferred.

The amount of medium softening point tackifier(s) employed in the practice of the present invention is such to provide the adhesive latex composition with a balance of tack and cohesive strength. Typically, the amount of medium softening point tackifier(s) varies in the range of from 5 to 50, preferably from 10 to 50, most preferably from 20 to 50, weight percent based on the total weight of the adhesive.

In a particularly preferred embodiment, the tackifier is a mixture of a low softening point rosin acid tackifier and a medium softening point rosin acid tackifier. More preferably, the tackifier is a mixture of about 15 weight percent low softening point rosin add tackifier and about 35 weight percent medium softening point rosin acid tackifier, based on the total weight of the adhesive composition.

The combined amount of the low softening point tackifier(s) and the medium softening point tackifier(s) is preferably between 15 and 50 weight percent, based on the total weight of components (A), (B) and (C) of the adhesive. In a particular embodiment of the present invention, one or more rosin acid tackifiers, rosin ester tackifiers, or a mixture of rosin acid tackifier(s) and rosin ester tackifier(s) are used.

Depending on the intended use of the adhesive latex composition prepared according to the present invention, various other additives and ingredients known to those skilled in the art can be incorporated to prepare adhesive formulations. Such additives include, for example, anti-foaming agents, wetting agents, thickeners, plasticizers, fillers, pigments, crosslinkers, antioxidants and metal chelating agents. Known anti-foaming agents include silicon oils and acetylene glycols. Typical plasticizers include mineral oil, liquid polybutenes, liquid polyacrylates and lanolin. Zinc oxide, titanium dioxide, alumina hydrate, calcium carbonate, and clay are typically employed fillers. Common known wetting agents include alkylphenol ethoxylates, alkali metal dialkyl sulphosuccinates, acetylene glycols and alkali metal alkyl sulphates. Commercially available surfactants are listed in "McCutcheon's Emulsifiers and Detergents" published annually. Typical thickeners include polyacrylates, polyacrylamides, xanthan gums, modified celluloses or particulate thickeners such as silicas and clays.

The compositions of the present invention adhere well to polymer surfaces such as plasticized poly-(vinylchloride), Mylar® polyester film, cellulose acetate, nylon, polyethylene and polypropylene as well as to paper, metal and painted surfaces. As such, they may be used as the adhesive component in pressure sensitive tapes, labels, films and foams. They are especially useful in the adhesive components of labels, tapes, decals, film sheets and foams. The alkali dispersibility of the compositions of the present invention has the added advantage that these adhesives can be removed from surfaces by simply soaking in dilute alkali.

Known coating processes, including roller coaters, blade coaters, Meyer rods or air coaters, can be used to prepare such articles of manufacture with the pressure sensitive adhesive compositions of the present invention. The resin may be coated directly to the article which then may or may not have a conventional release paper for temporary protection. Alternatively, the adhesive may be coated onto a release paper and then transferred to the second surface which is desired to be coated by passing both the release paper and the second surface together through rolls.

The coated substrate is dried by normal means, usually by passing it through a heating tunnel or oven which may use circulating hot air or infrared lamps to dry the coated substrate. The drying time will be a function of a number of factors such as the heat capacity of the substrate, the type of heating, the oven temperature, air velocities (if circulating air is used) and the rate of passage of the substrate through the oven or heating tunnel. One skilled in art may readily determine suitable time/temperature relationships to determine optimum drying conditions in particular equipment for the product.

The following examples are given to illustrate the invention and should not be interpreted as limiting it in any way. Unless stated otherwise, all parts and percentages are given by weight.

The adhesive compositions of the present invention were evaluated according to the following test methods and procedures.

### Peel Adhesion to High Density Polyethylene (HDPE)

The 180° peel adhesion to HDPE is measured using a modified Finat Method (FTM 1). The modification involves the use of HDPE test surfaces in place of the glass surface used in FTM 1. 2.5cm wide and 20.0 cm long test strips of adhesive coated paper are applied to the test surface and rolled with a standard Finat test roller. After applying the test strips to the HDPE plates, they are left for a period of 20 minutes (min) at 23°C ± 2°C and 50 percent (%) ± 5 percent (%) relative humidity.

The test plates are then fixed in an Instron Tensile Tester so that the peel angle is 180° and the strip is peeled at a rate of 300 mm per minute (mm/min). If the adhesive force exceeds the strength of the paper facing material, the result recorded is the maximum reached before the paper tears and this result is followed by the postscript "pt" (paper tear)

### Peel Adhesion to Cardboard

The above-described 180° peel adhesion test is repeated using Davidsons liner board (commercially available from Davidsons. Aberdeen, U.K.) in place of the HDPE plates. The test samples are left for 1 hour (h) before carrying out the peel test.

### Shear Adhesion

Shear adhesion is measured by a modified version of the Finat Method (FTM 8). A 2.5 cm by 1.25 cm strip of adhesive coated paper is applied to a steel test plate with the long axis vertical. The test strips are rolled down with the standard 2 kg roller and the test panel clamped in the test rig at 2° to the vertical. A 1 kg weight is attached to the bottom of the test strip and the time for the test strip to separate from the date is recorded.

### Loop-Tack (Quick Stick)

Quick stick to low density polyethylene (LDPE) is measured using a modified Finat Method (FTM 9). A 2.5 cm by 30 cm strip of LDPE is lightly brought into contact with the adhesive surface of a 2.5 cm wide specimen of adhesive coated paper such that a 2.5 cm by 2.5 cm contact area results. The tensile tester machine direction is then immediately reversed and separation achieved at a rate of 500 mm/min. The force to separate the two surfaces is recorded. If the adhesive force exceeds the strength of the paper facing material, the result recorded is the maximum reached before the paper tears and this result is followed by the postscript "pt" (paper tear).

### Dispersibility

The adhesive composition is coated directly onto Mylar® polyester film using a Meyer rod to give a dry coat weight of about 20 g/m². The coating is cried at 100°C for 3.5 min in an oven. 10 cm by 2.5 cm adhesive strips are placed in a 250 mL bottle containing 150 mL dilute caustic solution at pH 12 and room temperature. The bottle is closed and shaken on a laboratory shaker for 30 min at 175 shakes per minute (shakes/min). After the 30 minute-period, the condition of the adhesive film is visually observed. A good dispersible adhesive is the one which can be removed from the Mylar® polyester film and redispersed to fine particles. A non-alkali-dispersible adhesive would remain attached to the Mylar® polyester film, or if detached would remain as large intact pieces of adhesive film.

### Repulpability

Silicone release paper is removed from adhesive coated face stock paper. The adhesive coated paper is torn into pieces (roughly 10 cm by 10 cm) and fed into a beaker containing stirred 2 percent caustic solution at 55°C. Sufficient paper is added to give a consistency of 3 percent. The slurry is transferred to a Karl Frank Disintegrator and stirred at 3,000 revolutions per minute (rpm) for 5 min.

A sufficient quantity of this fiber stock is taken to produce a 80 g/m² handsheet and diluted to 0.05 percent consistency. A handsheeet of repulped paper is made in a Karl Frank sheet former. The sheet is removed from the paper making wire and dried at 94°C. The repulped paper sheet is observed visually for any particles of sticky adhesive film. If no such particles are seen, the paper is considered to be of good quality.

### Adhesive Coat Weight

Using a Model PS 100 circular cutting tool (commercially available from Schroeder KG, Germany), a disc having an area of about 100 cm² is cut from a pressure sensitive adhesive laminate. The silicone release paper is removed and the adhesive coated paper disc weighed. The adhesive coat weight is obtained by taking the difference between this weight and that of a similar disc of uncoated face paper.

### Example 1

An alkali-dispersible pressure sensitive adhesive latex, component (A), was prepared by emulsion polymerization of a monomer mixture comprising 75 parts by weight n-butyl acrylate, 10 parts by weight methacrylic acid, 15 parts by weight 2-hydroxyethyl acrylate and 0.5 part t-dodecylmercaptan as chain transfer agent. The resultant latex had a solids content of 44.6 percent and a Tg of -18°C. To the resulting latex was added 27.5 dry parts by weight each of Tacolyn® 64 (softening point about 60°C, measured by Hercules' Drop Method) and Tacolyn® 98 (liquid at room temperature) rosin ester tackifier emulsions.

Separately, a pressure sensitive adhesive latex, component (B), (Tg approx. -40°C, commercially available from The Dow Chemical Co. under the trademark DL 367) (52 percent solids) was tackified with 40 dry parts of Tacolyn® 64 rosin ester tackifier emulsion. The two separate latices were then blended together in equal amounts to produce the final pressure sensitive adhesive composition.

This composition was coated onto a silicone release paper using a Meyer rod to give a dry coat-weight of about 20 g/m². The coating was dried for 3 1/2 minutes in an oven at 110°C and then transferred to a paper face stock by passing between two rollers under pressure. The adhesive properties of this pressure sensitive adhesive are shown in Table 1.

The pressure sensitive adhesive composition was also coated and dried on Mylar® polyester film and shaken for 30 minutes in dilute caustic solution at pH 12 and room temperature. The adhesive film redispersed to a dispersion of fine particles.

When repulped in a 2 percent caustic solution at 55°C, the paper coated with this adhesive can be recycled into a paper sheet showing little evidence of visible adhesive particles. Thus, it was considered of good quality.

### Comparative Example A

A pressure sensitive adhesive latex (DL 367) which was the same as used in Example 1 was tackified with 40 dry parts of Tacolyn® 64 rosin ester tackifier emulsion. This adhesive was transfer coated to a paper face stock. The adhesive properties of this adhesive are shown in Table 1.

When coated and dried on Mylar® polyester film and then shaken for 30 minutes in a dilute caustic solution at pH 12 and room temperature, this adhesive remained attached to the Mylar® polyester film and could not be redispersed to a dispersion of fine adhesive particles.

When repulped in a 2 percent caustic solution at 55°C, paper coated with this adhesive resulted in a recycled paper sheet containing large sticky pieces of adhesive film. The recycled paper was of very low quality.

### Comparative Example B

The alkali-dispersible latex of Example 1 was tackified with 55 dry weight parts of Tacolyn® 64 rosin ester tackifier emulsion. This latex was mixed with an equal amount of the tackified pressure sensitive adhesive latex of Comparative Example A. The resulting adhesive composition was transfer coated onto a paper face stock. The adhesive properties are shown in Table 1.

When coated and dried on Mylar® polyester film and shaken for 30 minutes in dilute caustic solution at pH 12 and room temperature, the adhesive film remained attached to the Mylar® polyester film and could not be redispersed to a dispersion of fine particles.

When repulped in a 2 percent caustic solution at 55°C, paper coated with this adhesive resulted in a recycled paper sheet containing large sticky pieces of adhesive film. The recycled paper was of very low quality.

### Example 2

The alkali-dispersible latex of Example 1 was tackified with 27.5 dry weight parts each of Permatac A522 acid tackifier emulsion (softening point about 50°C) and Tacolyn® 64 rosin ester tackifier emulsion. This latex was then mixed with an equal weight of pressure sensitive adhesive latex DL 367 tackified with 40 dry weight parts of Tacolyn® 64. The resulting adhesive composition was transfer coated onto a paper face stock. The adhesive properties are shown in Table 1.

When coated and dried on Mylar® polyester film and shaken for 30 minutes in dilute caustic solution at pH 12 and room temperature, the adhesive film redispersed to a dispersion of fine adhesive particles.

When repulped in a 2 percent caustic solution at 55°C, paper coated with this adhesive was recycled into a paper sheet showing no evidence of visible adhesive particles and thus, being considered of very good quality.

### Example 3

The alkali-dispersible latex of Example 1 was tackified with 27.5 dry weight parts each of Permatac A522 (softening point about 50°C) and Permatac A751 (softening point about 70°C) rosin acid tackifier emulsions. This latex was then mixed with an equal weight of pressure sensitive adhesive latex DL 367 tackified with 40 dry weight parts of Permatac A751 rosin acid tackifier emulsion. The resulting adhesive composition was transfer coated onto a paper face stock. The adhesive properties are shown in Table 1.

When coated and dried on Mylar® polyester film and shaken for 30 minutes in dilute caustic solution at pH 12 and room temperature, the adhesive film was redispersed to a dispersion of fine particles.

When repulped in a 2 percent caustic solution at 55°C, paper coated with this adhesive was recycled into a paper sheet showing no evidence of visible adhesive particles and thus, being considered of very good quality.

**TABLE 1**

| Properties | Example 1 | Comp. Ex. A* | Comp. Ex. B* | Example 2 | Example 3 |
|---|---|---|---|---|---|
| Coat weight, (g/m²) | 22.0 | 19.8 | 19.3 | 18.5 | 21.6 |
| Peel Adhesion to HDPE (N/25 mm) | 23.2 (pt¹) | 20.1 (pt) | 18.6 (pt) | 17.6 (pt) | 24.6 (pt) |
| Peel Adhesion to Cardboard (N/25 mm) | 7.2 | 7.1 | 12.5 | 10.3 | ND² |
| Shear Adhesion (min) | 8 | 29 | 12 | 4 | 11 |
| Loop-Tack - LDPE (N) | 21.1 (pt) | 16.8 (pt) | 12.6 (pt) | 12.3 (pt) | 15.4 (pt) |
| Dispersibility | Redisperses into fine particles | Remains on Mylar | Remains on Mylar | Redisperses into fine particles | Redisperses into fine particles |
| Repulpability (Quality of recycled paper) | Good | Very low | Very low | Very Good | Very Good |

| | | | | | |
|---|---|---|---|---|---|
| * Not an example of the present invention. | | | | | |
| 1 pt = paper tear | | | | | |
| 2 ND = Not determined | | | | | |

As readily apparent from the data shown in Table 1, the adhesive latex compositions of the present invention exhibit comparable adhesive properties to prior art pressure sensitive adhesives. Furthermore, the data of the examples of the present invention clearly show that the particular combination of a pressure sensitive adhesive latex which is alkali-dispersible when dried and a pressure sensitive adhesive latex which is non-alkalii-dispersible when dried readily redisperses in dilute alkali solution thereby resulting in recycled paper with excellent quality.

## Claims

1. An adhesive latex composition which is water-insoluble when dried comprising (A) from 90 weight percent to 10 weight percent of a pressure sensitive adhesive latex which is alkali-dispersible when dried and prepared by emulsion polymerization from a monomer mixture comprising from 50 to 99.5 weight percent of an ester or amide of (meth)acrylic acid and up to 50 weight percent ethylenically unsaturated carboxylic acid monomers; (B) from 10 weight percent to 90 weight percent of a pressure sensitive adhesive latex which is non-alkali-dispersible when dried and prepared by emulsion polymerization from a monomer mixture comprising from 50 to 99.5 weight percent of an ester or amide of (meth)acrylic acid and from 0.5 to 5 weight percent ethylenically unsaturated carboxylic acid monomers, said percentages being based on the total weight of the components (A) and (B).

2. The adhesive latex composition of Claim 1 wherein the alkali-dispersible pressure sensitive adhesive latex is employed in an amount of 70 weight to 30 weight percent.

3. The adhesive latex composition of Claim 2 wherein the non-alkali-dispersible pressure sensitive adhesive latex is derived from n-butyl acrylate or 2-ethylhexyl acrylate.

4. The adhesive latex composition of Claim 3 wherein the alkali-dispersible pressure sensitive adhesive latex is a copolymer of n-butyl acrylate, methacrylic acid and hydroxyethyl acrylate.

5. The adhesive latex composition of Claim 4 wherein the alkali-dispersible pressure sensitive adhesive latex and the non-alkali-dispersible pressure sensitive adhesive latex have a glass transition temperature below 0°C.

6. The adhesive latex composition of Claim 5 wherein the non-alkali-dispersible pressure sensitive adhesive latex is derived from n-butyl acrylate.

7. The adhesive latex composition of Claim 1 further comprising (C) up to 60 weight percent of one or more tackifiers, said weight percent being based on the combined weight of components (A), (B) and (C).

8. The adhesive latex composition of Claim 7 wherein the tackifier is employed in an amount of 15 weight percent to 50 weight percent.

9. The adhesive latex composition of Claim 7 wherein the tackifier is a mixture of at least one tackifier having a softening point of less than 55°C and at least one tackifier having a softening point between 55°C and 150°C.

10. An alkali-dispersible pressure sensitive adhesive prepared from the adhesive latex composition of Claim 1.

11. Pressure sensitive adhesive of Claim 10 wherein the adhesive is water-insoluble.

12. The pressure sensitive adhesive of Claim 11 useful to prepare adhesive labels.

13. A method of preparing a pressure sensitive adhesive label comprising (i) coating at least a portion of at least one major surface of a label substrate with the adhesive latex composition of claim 1, and (ii) drying the coated label substrate so as to convert the latex coating to a pressure sensitive adhesive layer.

14. An adhesive label prepared using the pressure sensitive adhesive composition of Claim 1.

## Patentansprüche

1. Kleblatexzusammensetzung, die nach dem Trocknen wasserunlöslich ist, umfassend (A) von 90 Gew.-% bis 10 Gew.-% eines druckempfindlichen Kleblatex, der nach dem Trocknen alkali-dispergierbar ist und durch Emulsionspolymerisation aus einer Monomerenmischung hergestellt ist, die von 50 bis 99,5 Gew.-% eines Esters oder Amids von (Meth)Acrylsäure und bis zu 50 Gew.-% ethylenartig ungesättigte Carbonsäuremonomere umfaßt; (B) von 10 Gew.-% bis 90 Gew.-% eines druckempfindlichen Kleblatex, der nach dem Trocknen nicht alkali-dispergierbar ist und durch Emulsionspolymerisation aus einer Monomerenmischung hergestellt ist, die von 50 bis 99,5 Gew.-% eines Esters oder Amids von (Meth)Acrylsäure und von 0,5 bis 5 Gew.-% ethylenartig ungesättigte Carbonsäuremonomere umfaßt, wobei sich diese Prozentsätze auf das Gesamtgewicht der Komponenten (A) und (B) beziehen.

2. Kleblatexzusammensetzung nach Anspruch 1, in welcher der alkali-dispergierbare druckempfindliche Kleblatex in einer Menge von 70 bis 30 Gew.-% verwendet wird.

3. Kleblatexzusammensetzung nach Anspruch 2, in welcher der nicht alkali-dispergierbare druckempfindliche Kleblatex von n-Butylacrylat oder 2-Ethylhexylacrylat abstammt.

4. Kleblatexzusammensetzung nach Anspruch 1, in welcher der alkali-dispergierbare druckempfindliche Kleblatex ein Copolymeres von n-Butylacrylat, Methacrylsäure und Hydroxyethylacrylat ist.

5. Kleblatexzusammensetzung nach Anspruch 4, in welcher der alkali-dispergierbare druckempfindliche Kleblatex und der nicht alkali-dispergierbare druckempfindliche Kleblatex einen Einfrierbereich unterhalb 0°C haben.

6. Kleblatexzusammensetzung nach Anspruch 5, in welcher der nicht alkali-dispergierbare druckempfindliche Kleblatex von n-Butylacrylat abstammt.

7. Kleblatexzusammensetzung nach Anspruch 1, weiter umfassend (C) bis zu 60 Gew.-% von einem oder mehreren Klebrigmachern, wobei dieser Gewichtsprozentsatz auf dem kombinierten Gewicht der Komponenten (A), (B) und (C) basiert.

8. Kleblatexzusammensetzung nach Anspruch 7, in welcher der Klebrigmacher in einer Menge von 15 Gew.-% bis 50 Gew.-% verwendet wird.

9. Kleblatexzusammensetzung nach Anspruch 7, in welcher der Klebrigmacher eine Mischung von wenigstens einem Klebrigmacher mit einem Erweichungspunkt von weniger als 55°C und wenigstens einem Klebrigmacher mit einem Erweichungspunkt zwischen 55°C und 150°C ist.

10. Alkali-dispergierbarer druckempfindlicher Klebstoff, hergestellt aus der Kleblatexzusammensetzung von Anspruch 1.

11. Druckempfindlicher Klebstoff nach Anspruch 10, in welchem der Klebstoff wasserunlöslich ist.

12. Druckempfindlicher Klebstoff nach Anspruch 11, brauchbar zur Herstellung von Klebeetiketten.

13. Verfahren zur Herstellung eines druckempfindlichen Klebeetiketts, umfassend (i) Beschichten wenigstens eines Teiles von wenigstens einer größeren Oberfläche eines Etikettsubstrates mit der Kleblatexzusammensetzung von Anspruch 1, und (ii) Trocknen des beschichteten Etikettsubstrates zur Umwandlung der Latexbeschichtung in eine druckempfindliche Klebstoffschicht.

14. Klebeetikett, hergestellt unter Verwendung der druckempfindlichen Klebstoffzusammensetzung von Anspruch 1.

## Revendications

1. Composition de latex adhésive, insoluble dans l'eau lorsqu'elle est sèche, qui comprend :
A) de 90 à 10 % en poids d'un latex adhésif sensible à la pression, dispersable dans un alcali lorsqu'il est sec, préparé par polymérisation en émulsion d'un mélange de monomères comprenant de 50 à 99,5 % en poids d'un ester ou amide de l'acide acrylique ou méthacrylique et jusqu'à 50 % en poids de monomères de type acide carboxylique à insaturation éthylénique, et
B) de 10 à 90 % en poids d'un latex adhésif sensible à la pression, non dispersable dans un alcali lorsqu'il est sec, préparé par polymérisation en émulsion d'un mélange de monomères comprenant de 50 à 99,5 % en poids d'un ester ou amide de l'acide acrylique ou méthacrylique et de 0,5 à 5 % en poids de monomères de type acide carboxylique à insaturation éthylénique,
lesdits pourcentages étant rapportés au poids total des composants (A) et (B).

2. Composition de latex adhésive conforme à la revendication 1, dans laquelle on utilise le latex adhésif sensible à la pression et dispersable dans les alcalis en une proportion de 70 à 30 % en poids.

3. Composition de latex adhésive conforme à la revendication 2, dans laquelle le latex adhésif sensible à la pression qui n'est pas dispersable dans les alcalis dérive de l'acrylate de n-butyle ou de l'acrylate de 2-éthylhexyle.

4. Composition de latex adhésive conforme à la revendication 3, dans laquelle le latex adhésif sensible à la pression qui est dispersable dans les alcalis est un copolymère d'acrylate de n-butyle, d'acide méthacrylique et d'acrylate d'hydroxyéthyle.

5. Composition de latex adhésive conforme à la revendication 4, dans laquelle le latex adhésif sensible à la pression et dispersable dans les alcalis et le latex adhésif sensible à la pression et non dispersable dans les alcalis présentent une température de transition vitreuse inférieure à 0°C.

6. Composition de latex adhésive conforme à la revendication 5, dans laquelle l'adhésif sensible à la pression et non dispersable dans les alcalis dérive de l'acrylate de n-butyle.

7. Composition de latex adhésive conforme à la revendication 1, qui contient en outre (C) jusqu'à 60 % en poids d'un ou de plusieurs agents d'adhérence, ce pourcentage étant rapporté au poids total des composants (A), (B) et (C).

8. Composition de latex adhésive conforme à la revendication 7, dans laquelle on utilise l'agent d'adhérence en une proportion de 15 à 50 % en poids.

9. Composition de latex adhésive conforme à la revendication 7, dans laquelle l'agent d'adhérence est un mélange d'au moins un agent d'adhérence dont le point de ramollissement est inférieur à 55 °C et d'au moins un agent d'adhérence dont le point de ramollissement se situe entre 55 à 150 °C.

10. Adhésif sensible à la pression et dispersable dans les alcalis, préparé à partir d'une composition de latex adhésive conforme à la revendication 1.

11. Adhésif sensible à la pression, conforme à la revendication 10, lequel adhésif est insoluble dans l'eau.

12. Adhésif sensible à la pression, conforme à la revendication 11, utilisable pour fabriquer des étiquettes adhésives.

13. Procédé de fabrication d'étiquettes adhésives sensibles à la pression, qui comporte
a) le fait d'étaler, sur au moins une partie d'au moins l'une des surfaces principales d'un substrat d'étiquettes, une composition de latex adhésive conforme à la revendication 1, et
b) le fait de faire sécher le substrat d'étiquettes ainsi revêtu, de façon à transformer la couche de latex en une couche d'adhésif sensible à la pression.

14. Etiquettes adhésives fabriquées à l'aide d'une composition adhésive sensible à la pression, conforme à la revendication 1.
